Europäisches Patentamt

European Patent Office

Office européen des brevets

(19)

(11) **EP 0 926 855 B1**

(12) **FASCICULE DE BREVET EUROPEEN**

(45) Date de publication et mention
de la délivrance du brevet:
**04.05.2005   Bulletin 2005/18**

(51) Int Cl.⁷: **H04L 1/00**, G06K 19/07

(21) Numéro de dépôt: **97122711.1**

(22) Date de dépôt: **23.12.1997**

(54) **Transpondeur pour communication dite "half-duplex"**

Transponder für "half duplex"-Kommunikation

Transponder for "half-duplex" communication

(84) Etats contractants désignés:
**AT BE CH DE FR GB IE LI NL**

(43) Date de publication de la demande:
**30.06.1999   Bulletin 1999/26**

(73) Titulaire: **EM Microelectronic-Marin SA
2074 Marin (CH)**

(72) Inventeur: **Roz, Thierry
2525 Prêles (CH)**

(74) Mandataire: **Patry, Didier Marcel Pierre et al
I C B,
Ingénieurs Conseils en Brevets S.A.
Rue des Sors 7
2074 Marin (CH)**

(56) Documents cités:
**EP-A- 0 777 193          WO-A-96/28880
US-A- 5 517 179**

EP 0 926 855 B1

## Description

La présente invention concerne le domaine des transpondeurs et, plus précisément, des transpondeurs pour communication dite "half-duplex".

Il existe classiquement un grand nombre de dispositifs portatifs pour permettre l'identification à distance d'un objet inconnu. Typiquement, des données sont transférées sous forme de signaux radioélectriques, entre une station de base et un dispositif portatif que l'on réalise usuellement en utilisant un transpondeur.

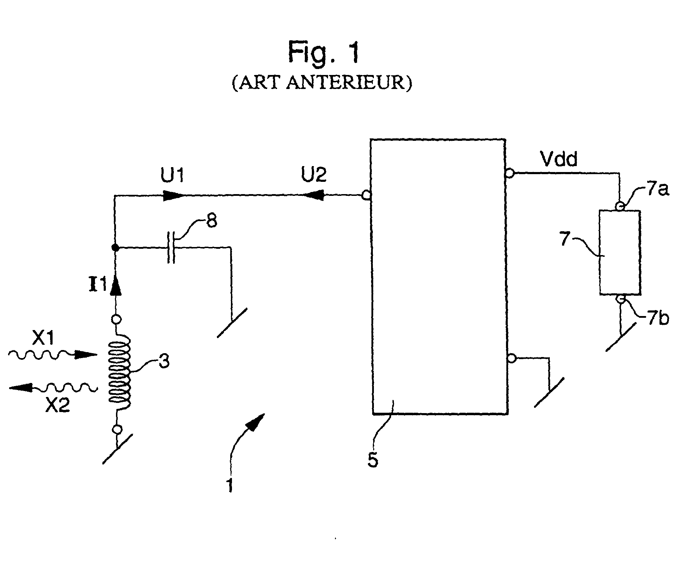

La figure 1 représente un transpondeur classique 1 qui comprend une antenne 3 pour recevoir et émettre des données sous forme de signaux radioélectriques, un moyen de traitement 5 connecté à l'antenne 3 pour traiter les données reçues et les données à émettre, et un moyen d'alimentation 7 pour fournir une tension d'alimentation Vdd aux différents composants du transpondeur 1, notamment au moyen de traitement 5.

Une communication dite "half-duplex" entre la station de base et le transpondeur 1 comprend deux phases de fonctionnement : une phase de réception et une phase d'émission.

Au cours de la phase de réception, la station de base émet un signal radioélectrique X1, l'antenne 3 le reçoit et le convertit en une tension électrique $U_1$. La station de base peut également fournir l'énergie électrique nécessaire pour l'alimentation électrique du transpondeur 1, en émettant le signal X1 à une puissance électrique suffisamment élevée. Dans ce cas particulier, le transpondeur 1 fonctionne comme un composant "passif", et le moyen d'alimentation 7 comprend un condensateur de stockage destiné à stocker ladite énergie électrique.

Au cours de la phase d'émission, une tension électrique $U_2$ est présente aux bornes du moyen de traitement 5, et est fournie à l'antenne 3 qui la convertit en un signal radioélectrique X2. Dans le cas particulier où le transpondeur 1 est passif, le condensateur 7 qui a stocké de l'énergie électrique au cours de la phase de réception, fournit au cours de la phase d'émission l'alimentation électrique nécessaire au fonctionnement du moyen de traitement 5.

Un problème rencontré au cours d'une telle communication réside dans l'optimisation de l'énergie électrique transférée entre l'antenne 3 et le moyen de traitement 5.

Une solution classique à ce problème consiste à connecter en parallèle avec l'antenne 3 un condensateur 8, de manière à former un circuit de type LC parallèle, comme le représente la figure 1. En effet, ce circuit peut fournir la tension $U_1$ à une amplitude maximale, quand la fréquence de cette tension est égale à la fréquence de résonance fo de ce circuit. On dit alors que le circuit LC est résonant en tension. On rappelle que la fréquence de résonance fo d'un circuit LC est définie comme suit :

$$fo = \frac{1}{2\Pi\sqrt{LC}} \qquad (1)$$

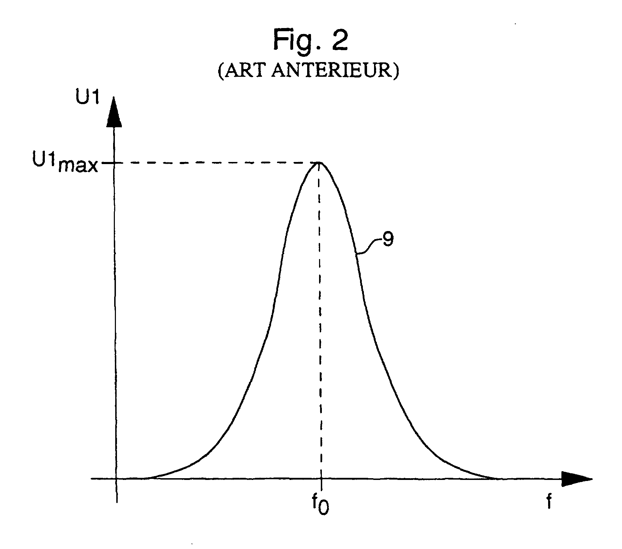

A titre illustratif, la figure 2 représente une forme d'onde 9 illustrant l'évolution de la tension $U_1$ en fonction de sa fréquence f, dans le cas où le circuit est de type LC parallèle. Ainsi, quand la fréquence f de cette tension est sensiblement égale à ladite fréquence de résonance fo, l'amplitude de la tension U1 est maximale, la référence $U_{1max}$ désignant ladite valeur maximale de tension.

Par conséquent, en rappelant que la puissance moyenne absorbée par le moyen de traitement 5 est directement proportionnelle au carré de la valeur de tension $U_{1max}$, cette puissance électrique est alors optimale au cours de la phase de réception d'une communication de typé susmentionné, en supposant que le signal X1 est périodique de fréquence fo. Autrement dit, le transfert d'énergie électrique entre l'antenne 3 et le moyen de traitement 5 est optimale au cours de la phase de réception.

Un inconvénient de la solution classique susmentionnée, réside dans le fait que, au cours de la phase d'émission, le circuit LC parallèle ne permet pas d'optimiser le transfert d'énergie entre le moyen de traitement 5 et l'antenne 3. En effet, au cours de cette phase, dans le cas où le circuit connecté aux bornes du moyen de traitement 5, est de type LC parallèle, ce moyen fournit un courant I2, et la tension U2 présente aux bornes dudit moyen est limitée par ses caractéristiques d'entrée. Il en résulte une limitation de l'énergie présente dans l'antenne 3, ainsi que du champ magnétique créé par cette antenne au cours de la phase d'émission.

La Demanderesse de la présente invention a ainsi observé que les transpondeurs classiques tel que celui décrit en relation avec la figure 1, ne répond pas de manière satisfaisante au problème susmentionné, puisque l'échange d'énergie électrique lors d'une communication "half-duplex" n'est pas optimal, comme cela a été décrit de façon détaillé ci-dessus.

Le document EP 0 777 193 décrit un circuit d'alimentation et de modulation pour un transpondeur de type passif. La bobine et le condensateur sont connectés en série dans une phase de réception de signaux pour améliorer l'énergie accumulée l'aide d'un redresseur. La bobine et le condensateur sont connectés en parallèle dans une phase d'émission pour faciliter la détection du transpondeur. Cependant, un tel agencement du circuit de type LC en phase de réception et d'émission n'est prévu que pour un transpondeur de type passif.

Un objet de la présente invention est de prévoir un transpondeur palliant les inconvénients des transpondeurs classiques, notamment pour optimiser l'énergie électrique échangée au cours des phases de réception et d'émission pendant une communication "half-duplex".

Un autre objet de la présente invention est de prévoir un transpondeur répondant aux critères. traditionnels dans l'industrie des semi-conducteurs, de complexité et de coût.

Ces objets, ainsi que d'autres, sont atteints par le transpondeur selon la revendication 1.

Un avantage du moyen de commutation du transpondeur selon la présente invention, est de réaliser deux configurations différentes du transpondeur, en phase de réception et en phase d'émission, propres à optimiser les puissances électriques échangées entre l'antenne et le moyen de traitement.

Un avantage du transpondeur selon la présente invention, réside dans le fait qu'il est constitué de composants usuellement réalisés dans l'industrie des semi-conducteurs, notamment par des étapes de fabrication d'une filière de type CMOS connue en soi.

Ces objets, caractéristiques et avantages, ainsi que d'autres, de la présente invention apparaîtront plus clairement à la lecture de la description détaillée d'un mode de réalisation préféré de l'invention, donné à titre d'exemple uniquement, en relation avec les figures jointes, parmi lesquelles :

- la figure 1 déjà citée représente un transpondeur selon l'art antérieur;
- la figure 2 déjà citée représente une forme d'onde illustrant la relation entre l'amplitude et la fréquence d'un signal présent dans le transpondeur de la figure 1;
- la figure 3 représente un transpondeur selon la présente invention;
- la figure 4 représente de façon détaillée le transpondeur de la figure 3, au cours d'une phase de réception;
- la figure 5 représente de façon détaillée le transpondeur de la figure 3, au cours d'une phase d'émission;
- la figure 6 représente un mode de réalisation préféré du moyen de commutation du transpondeur de la figure 3;
- la figure 7 représente une forme d'onde illustrant la relation entre l'amplitude et la fréquence d'un signal présent dans le transpondeur de la figure 3, au cours d'une phase d'émission.

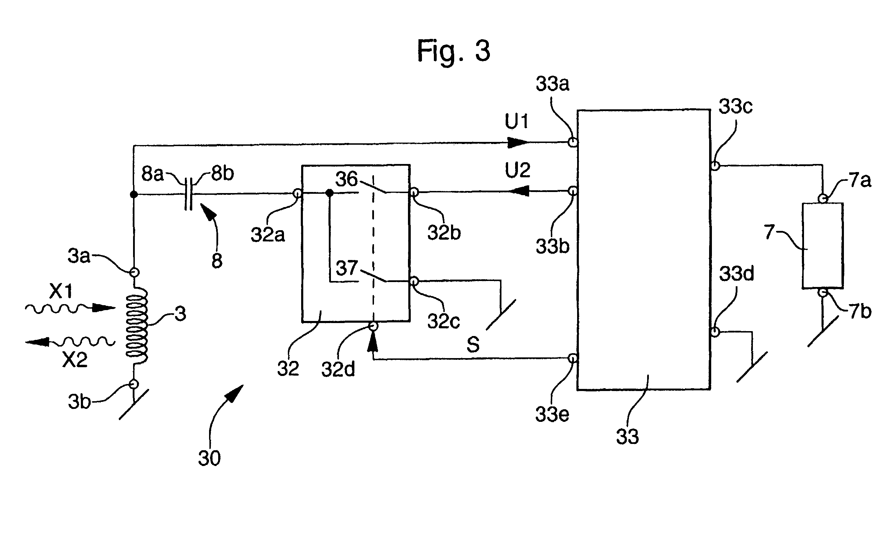

La figure 3 représente un transpondeur 30 selon la présente invention.

On note que le transpondeur 30 représenté en figure 3 a une structure qui est proche du transpondeur 1 représente en figure 1. Ainsi, par souci de simplicité, les composants représentés en figure 3 et désignés par les mêmes références que ceux représentés en figure 1, sont sensiblement identiques à ceux désignés en figure 1.

Ainsi le transpondeur 30 comprend une antenne 3, un condensateur 8, un moyen de traitement 33 et un moyen d'alimentation 7.

Au cours d'une communication "half-duplex" telle que définie ci-dessus, le transpondeur 30 est destiné à recevoir des données au cours de la phase de réception, et fournir d'autres données au cours de la phase d'émission. A cet effet, les composants susmentionnés sont agencés et connectés comme suit.

L'antenne 3 est agencée pour pouvoir recevoir et émettre des signaux radioélectriques X1 et X2 contenant les données échangées entre une station de base (non représentée) et le moyen de traitement 33. A cet effet, l'antenne 3 comprend deux bornes de connexion 3a et 3b par lesquelles sont fournies une tension électrique U1 contenant les données à traiter par le moyen de traitement 33, ainsi qu'une tension électrique U2 contenant les données à émettre. Par ailleurs, la borne 3b est connectée à la masse du transpondeur 30.

On réalise l'antenne 3 en utilisant une bobine, comme cela est connu en soi.

Le condensateur 8 est agencé pour pouvoir être connecté avec l'antenne 3. A cet effet, le condensateur 8 comprend une première borne 8a connectée à la borne 3a de l'antenne 3, et une seconde borne de connexion 8b.

On réalise le condensateur 8 en utilisant un composant capacitif, comme cela est connu en soi.

Le moyen de traitement 33 est agencé pour pouvoir recevoir, traiter et fournir lesdites données échangées avec l'antenne 3. A cet effet, le moyen de traitement 33 comprend une borne d'entrée 33a connectée avec la borne 3a de l'antenne 3, pour recevoir la tension U1, et une borne de sortie 33b pour fournir la tension U2. En outre, le moyen de traitement 33 comprend une borne d'alimentation 33c pour pouvoir recevoir une alimentation électrique, une borne de masse 33d connectée à la masse du transpondeur 30, ainsi qu'une borne de commande 33e pour pouvoir fournir un signal de commande S.

On réalise le moyen de traitement 33 en formant un bloc logique classique et une interface classique disposée entre ce bloc et l'antenne 3.

Le moyen d'alimentation 7 est agencé pour pouvoir fournir l'alimentation électrique au moyen de traitement 33, sous la forme d'une tension d'alimentation Vdd. A cet effet, le moyen d'alimentation 7 comprend une borne de connexion 7a connectée à la borne 33c du moyen de traitement 33, et une borne de masse 7b connectée à la masse du transpondeur 30.

Pour réaliser le moyen d'alimentation 7, on distinguera les deux types de transpondeur connus en soi. Dans le cas déjà cité ci-dessus où le transpondeur 30 est "passif", le moyen d'alimentation 7 est réalisé en utilisant un condensateur de stockage destiné à stocker l'énergie électrique transmise au cours de la phase de réception. Par contre, dans le cas d'un transpondeur "actif", le moyen d'alimentation 7 est réalisé en utilisant une batterie au lithium classique.

En outre, le transpondeur 30 comprend un moyen de commutation 32 qui est connecté avec le condensateur 8, le moyen de traitement 33 et la masse de ce transpondeur. A cet effet, le moyen de commutation 32 comprend une première borne de connexion 32a connectée à la borne 8b du condensateur 8, une deuxième borne de connexion 32b connectée à la borne 33b du moyen de traitement 33, et une troisième borne de connexion 32c connectée à la masse du transpondeur 30. En outre, le moyen de commutation 32 comprend une borne de commande 32d connectée à la borne 33e du moyen de traitement 33, pour recevoir le signal S.

Pour l'essentiel, le moyen de commutation 32 comprend deux interrupteurs 36 et 37 qui sont connectés à la borne 32d, de manière à pouvoir être commandés par le signal S. En outre, l'interrupteur 36 est connecté entre la borne 32a et la borne 32b, et l'interrupteur 37 est connecté entre la borne 32a et la borne 32c.

Le moyen de commutation 32 est agencé de manière à pouvoir recevoir, par la borne 32d, le signal de commande S fourni par le moyen de traitement 33, et connecter en réponse le moyen de traitement 33, le condensateur 8, ainsi que l'antenne 3, comme cela est décrit de façon détaillée ci-dessous.

Au début de la phase de réception, le moyen de traitement 33 commande l'interrupteur 37 à la fermeture, et l'interrupteur 36 à l'ouverture.

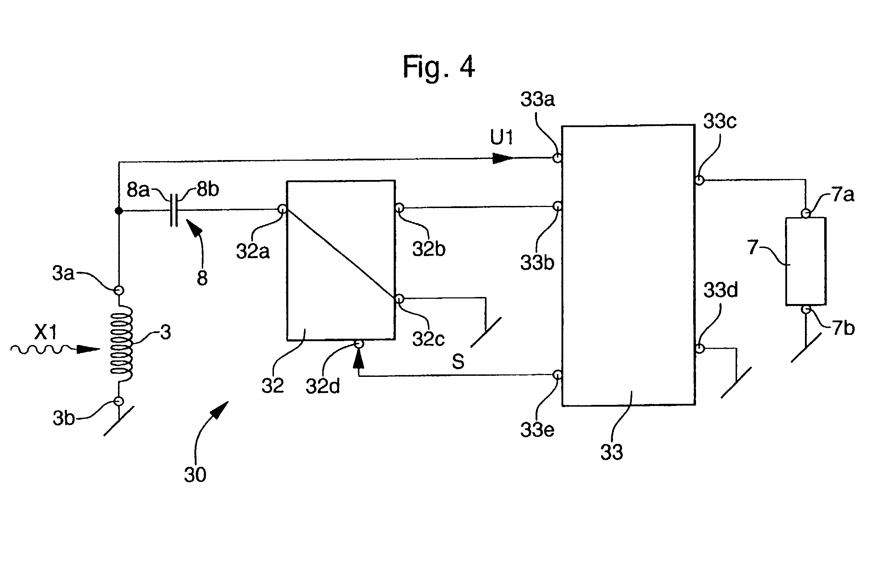

La figure 4 représente de façon détaillée le transpondeur 30, au cours de la phase de réception, en particulier les connexions établies par le moyen de commutation 32.

Ainsi, le transpondeur de la figure 4 ayant la même structure que le transpondeur de la figure 3, les composants représentés en figures 3 et 4 sont désignés par les mêmes références dans ces deux figures.

On note que, au cours de la phase de réception, le moyen de commutation 32 connecte la borne 32a à la borne 32c, de sorte que l'antenne 3 est connectée en parallèle avec le condensateur 8. Autrement dit, le condensateur 8 et l'antenne 3 sont connectés de manière à former un circuit de type LC parallèle. Dans ce cas, on retrouve une configuration qui est proche de celle du transpondeur classique 1, décrite ci-dessous en relation avec la figure 1.

Au cours de la communication "half-duplex", la phase de réception est suivie de la phase d'émission. Au début de cette phase, le moyen de traitement 33 commande l'interrupteur 37 à l'ouverture, et l'interrupteur 36 à la fermeture.

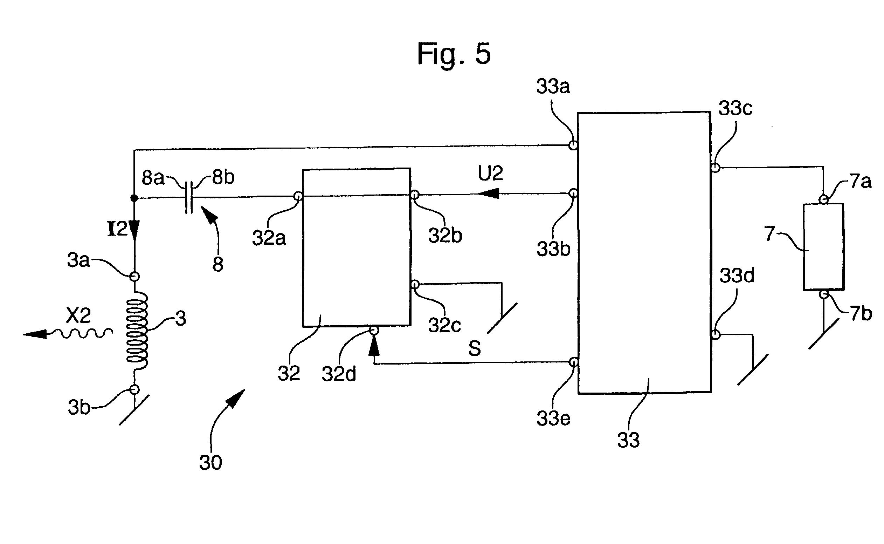

La figure 5 représente de façon détaillée le transpondeur 30, au cours de la phase d'émission, en particulier les connexions établies par le moyen de commutation 32.

Ainsi, le transpondeur de la figure 5 ayant la même structure que le transpondeur de la figure 3, les composants représentés en figures 3 et 5 sont désignés par les mêmes références dans ces deux figures.

On note que, au cours de la phase d'émission, le moyen de commutation 32 connecte la borne 32b à la borne 32a, les bornes 32c et 32d étant libres, de sorte que l'antenne 3 est connectée en série avec le condensateur 8. Autrement dit, le condensateur 8 et l'antenne 3 sont connectés de manière à former un circuit de type LC série.

De préférence, on réalise le condensateur 8, le moyen de commutation 32 et le moyen de traitement 33 sont réalisés de façon monolithique dans un unique substrat semiconducteur. A titre de variante de réalisation, on peut réaliser également de façon monolithique, en plus de ces composants, l'antenne 3.

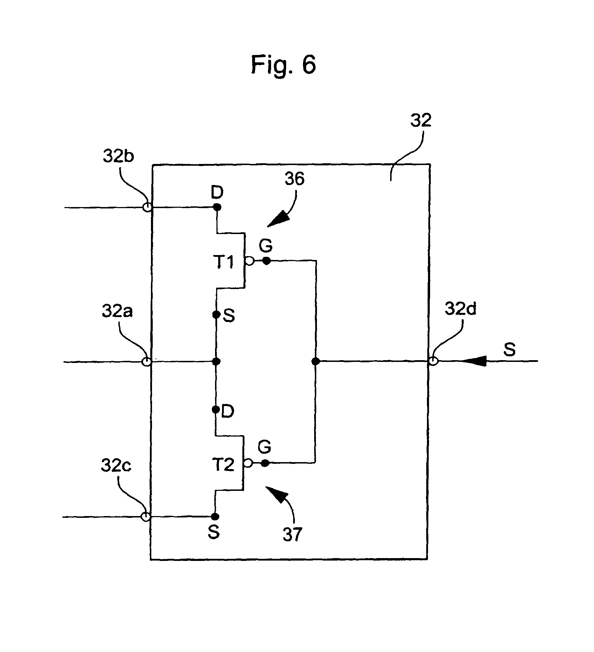

La figure 6 représente un mode de réalisation préféré du moyen de commutation 32 qui comprend deux transistors à effet de champ T1 et pour former respectivement les deux interrupteurs 36 et 37. A titre illustratif uniquement, en supposant que le substrat est un substrat de silicium de type P, le transistor T1 est à canal de type P, et le transistor T2 est à canal de type N.

Chacun des transistors T1 et T2 comprend une borne de grille, une borne de drain et une borne de source. La borne de drain du transistor T1 est connectée à la borne 32b, et sa borne de source est connectée à la borne 32a. La borne de source du transistor T2 est connectée à la borne 32c, et sa borne de drain est connectée à la borne 32a. Les bornes de grille des transistors T1 et T2 sont connectées à la borne 32d, de manière à être commandés par le moyen de traitement 33, de sorte que le transistor T2 est bloqué quand le transistor T1 est conducteur, et inversement, ce qui réalise les deux configurations du transpondeur 30 décrites en relation avec les figures 4 et 5.

A titre illustratif uniquement, on va maintenant décrire un mode fonctionnement du transpondeur 30 dont la structure est décrite ci-dessus en relation avec les figures 3 à 6, au cours d'une communication "half-duplex".

Au cours de la phase de réception, la configuration du transpondeur 30 est sensiblement identique à celle du transpondeur classique décrite en relation avec les figures 1 et 2, comme cela a déjà été mentionné.

Ainsi, la station émet un signal radioélectrique X1 à la fréquence fo telle que définie dans l'équation (1). L'antenne 3 du transpondeur 30 convertit ce signal en la tension U1 dont la fréquence est égale à la fréquence fo définie ci-dessus. Le moyen de traitement 33 commande au moyen de commutation de connecter l'antenne 3 et le condensateur 8, pour former un circuit LC parallèle. Le circuit LC réalise alors une résonance en tension, et la puissance électrique fournie de l'antenne 3 au moyen de traitement 33 est optimale.

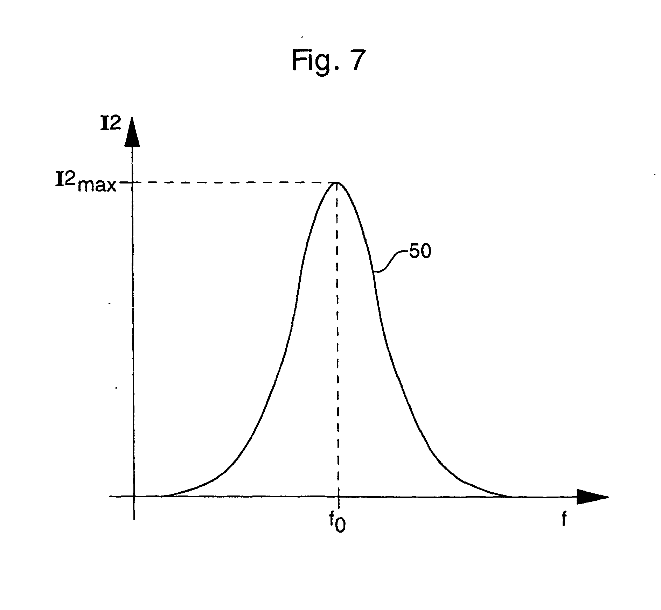

Au cours de la phase d'émission, le circuit connecté aux bornes du moyen de traitement 33 étant de type LC série, ce moyen fournit une tension électrique U2, contrairement au cas du transpondeur classique décrit en relation avec la figure 1, dans lequel le moyen de traitement 33 fournit un courant électrique I2. Il en ressort que le courant I2 présent dans le transpondeur 30 au cours de la phase d'émission n'est pas limité. Par ailleurs, le courant I2 est fourni à une fréquence qui est égale à la fréquence de résonance fo définie ci-dessus. La figure 7 représente une forme d'onde 50 illustrant la relation entre l'amplitude et la fréquence dudit courant I2 au cours d'une phase d'émission. Ainsi, quand la fréquence f de ce courant est sensiblement égale à ladite fréquence de résonance fo, l'amplitude du courant I2 est maximale. On dit alors que le circuit LC série est résonant en courant.

Ainsi, le transpondeur selon la présente invention est particulièrement avantageux, puisque les configurations de ce transpondeur en phase de réception et en phase d'émission, permettent d'optimiser les puissances électriques échangées entre l'antenne et le moyen de traitement.

Il va de soi pour l'homme de l'art que la description détaillée ci-dessus peut subir diverses modifications sans sortir du cadre de la présente invention.

## Revendications

1. Transpondeur (30) de type actif destiné à recevoir des données au cours d'une première phase ou phase de réception, et fournir d'autres données au cours d'une seconde phase ou phase d'émission, ce transpondeur comprenant :

   - une bobine (3) agencée en tant qu'antenne pour pouvoir recevoir et émettre des signaux radioélectriques contenant lesdites données;
   - un condensateur (8) connecté à la bobine, pour former un circuit résonant;
   - un moyen de traitement (33) agencé pour pouvoir recevoir, traiter et fournir lesdites données; et
   - un moyen d'alimentation (7), tel qu'une batterie, connecté au moyen de traitement, et agencé pour pouvoir fournir un signal d'alimentation électrique à différents composants du transpondeur,

   ce transpondeur étant **caractérisé en ce qu'**il comprend en outre un moyen de commutation (32) connecté entre une borne (8b) du condensateur et le moyen de traitement, et agencé de sorte que, sous la commande du moyen de traitement, la bobine et le condensateur sont connectés pour former, pendant toute la durée de la phase de réception, un circuit de type LC parallèle, et, pendant toute la durée de la phase d'émission, un circuit de type LC série connecté en série avec le moyen de traitement.

2. Transpondeur (30) selon la revendication 1, **caractérisé en ce que** la bobine (3), le condensateur (8), le moyen de commutation (32) et le moyen de traitement (33) sont réalisés de façon monolithique dans un unique substrat semiconducteur.

3. Transpondeur (30) selon la revendication 2, **caractérisé en ce que** l'antenne (3) est réalisée de façon monolithique dans ledit substrat.

4. Transpondeur (30) selon la revendication 2 ou 3, **caractérisé en ce que** le moyen de commutation (32) comprend :

   - un premier transistor (37) qui est à effet de champ et à canal de type N; et
   - un second transistor (36) qui est à effet de champ et à canal de type P.

5. Transpondeur (30) selon la revendication 2 ou 3, **caractérisé en ce que** le moyen de commutation (32) comprend :

   - un premier transistor (37) qui est à effet de champ et à canal de type P; et
   - un second transistor (36) qui est à effet de champ et à canal de type N.

6. Transpondeur (30) selon la revendication 4 ou 5, **caractérisé en ce que** la borne de grille des premier et second transistors (36; 37) est commandée par un signal de commande fourni par le moyen de traitement (33) de manière à bloquer un des transistors quand l'autre transistor est conducteur pour définir un circuit LC de type LC parallèle ou un circuit LC de type LC série en fonction du niveau du signal de commande.

## Patentansprüche

1. Transponder (30) des aktiven Typs, der dazu vorgesehen ist, während einer ersten Phase oder Empfangsphase Daten zu empfangen und während einer zweiten Phase oder Sendephase andere Daten zu liefern, wobei dieser Transponder umfasst:

   - eine Spule (3), die als Antenne ausgebildet ist, um funkelektrische Signale, die die Daten enthalten, empfangen und senden zu können;
   - einen Kondensator (8), der mit der Spule verbunden ist, um eine Resonanzschaltung zu bilden;
   - ein Verarbeitungsmittel (33), das so beschaffen ist, dass es die Daten empfangen, verarbeiten und liefern kann; und
   - ein Versorgungsmittel (7) wie etwa eine Batterie, die mit dem Verarbeitungsmittel verbunden und so beschaffen ist, dass es ein elektrisches Versorgungssignal an die verschiedenen Komponenten des Transponders liefern kann,

   wobei dieser Transponder **dadurch gekennzeichnet ist, dass** er außerdem ein Umschaltmittel (32) umfasst, das zwischen einen Anschluss (8b) des Kondensators und das Verarbeitungsmittel geschaltet und so beschaffen ist, dass unter der Steuerung des Verarbeitungsmittels die Spule und der Kondensator verbunden sind, um während der gesamten Dauer der Empfangsphase eine Schaltung des parallelen LC-Typs zu bilden und um während der gesamten Dauer der Sendephase eine Schaltung des seriellen LC-Typs, die mit dem Verarbeitungsmittel in Reihe geschaltet ist, zu bilden.

2. Transponder (30) nach Anspruch 1, **dadurch gekennzeichnet, dass** die Spule (3), der Kondensator (8), das Umschaltmittel (32) und das Verarbeitungsmittel (33) auf einem einzigen Halbleitersubstrat monolithisch verwirklicht sind.

3. Transponder (30) nach Anspruch 2, **dadurch gekennzeichnet, dass** die Antenne (3) auf dem Substrat monolithisch verwirklicht ist.

4. Transponder (30) nach Anspruch 2 oder 3, **dadurch gekennzeichnet, dass** das Umschaltmittel (32) umfasst:

   - einen ersten Transistor (37), der ein N-Kanal-Feldeffekttransistor ist; und
   - einen zweiten Transistor (36), der ein P-Kanal-Feldeffekttransistor ist.

5. Transponder (30) nach Anspruch 2 oder 3, **dadurch gekennzeichnet, dass** das Umschaltmittel (32) umfasst:

   - einen ersten Transistor (37), der ein P-Kanal-Feldeffekttransistor ist; und
   - einen zweiten Transistor (36), der ein N-Kanal-Feldeffekttransistor ist.

6. Transponder (30) nach Anspruch 4 oder 5, **dadurch gekennzeichnet, dass** der Gate-Anschluss des ersten und des zweiten Transistors (36; 37) durch ein Steuersignal gesteuert wird, das von dem Verarbeitungsmittel (33) geliefert wird, derart, dass einer der Transistoren sperrt, während der andere Transistor durchschaltet, um in Abhängigkeit vom Pegel des Steuersignals eine LC-Schaltung des parallelen LC-Typs oder eine LC-Schaltung des seriellen LC-Typs zu definieren.

**Claims**

1. Transponder (30) of the active type intended to receive data during a first phase or reception phase, and to provide other data during a second phase or transmission phase, said transponder including:

   - a coil (3) arranged as an antenna so as to be able to receive and transmit radioelectric signals containing said data;
   - a capacitor (8) connected to said coil, to form a resonant circuit;
   - processing means (33) arranged to be able to receive, process and supply said data; and
   - supply means (7), such as a battery, connected to said processing means, and arranged to be able to provide an electric supply signal to different components of the transponder,

   said transponder being **characterised in that** it further includes switching means (32) connected between a terminal (8b) of the capacitor and the processing means, and arranged so that, under the control of the processing means, the coil and the capacitor are connected to form, during the entire duration of the reception phase, a parallel LC circuit and, during the entire duration of the transmission phase, a series LC circuit connected in series with the processing means.

2. Transponder (30) according to claim 1, **characterised in that** the coil (3), the capacitor (8), the switching means (32) and the processing means (33) are made in a monolithic manner in a single semiconductor substrate.

3. Transponder (30) according to claim 2, **characterised in that** the antenna (3) is made in a monolithic manner in said substrate.

4. Transponder (30) according to claim 2 or 3, **characterised in that** the switching means (32) include:

   - a first transistor (37) which is an N channel field effect transistor; and
   - a second transistor (36) which is a P channel field effect transistor.

5. Transponder according to claim 2 or 3, **characterised in that** the switching means (32) includes:

   - a first transistor (37) which is a P channel field effect transistor; and
   - a second transistor (36) which is an N channel field effect transistor.

6. Transponder (30) according to claim 4 or 5, **characterised in that** the gate terminal of the first and second transistors (36; 37) is controlled by a control signal provided by the processing means (33) so as to block one of the transistors when the other transistor is conductor to define a LC circuit of the LC parallel type or a LC circuit of the LC series type in function of the level of the control signal.

# Fig. 1
(ART ANTERIEUR)

# Fig. 2
## (ART ANTERIEUR)

Fig. 3

# Fig. 4

EP 0 926 855 B1

Fig. 5

EP 0 926 855 B1

## Fig. 6

# Fig. 7